# EUROPEAN PATENT APPLICATION

(11) **EP 1 564 666 A1**
(43) Date of publication of application: **17.08.2005**
(21) Application number: 04103665.8
(22) Date of filing: 29.07.2004
(51) Int. Cl.: G06F 17/60

(54) **A device and a method for processing events and actions.**

(30) Priority: 12.02.2004 US 779343
(71) Applicant: Relaystar SA, 1050 Brussels (BE)
(72) Inventor: Odent, Stephane V., 1050, Brussels (BE); Van de Putte, Dimitri, 1050, Brussels (BE); Vernier, Dominique, 1050, Brussels (BE)
(74) Representative: Quintelier, Claude

(57) **Abstract**

A device operating as a finite state machine and provided for processing events and actions relating to at least one object to be travelled between an initial and a final state, said device comprising a processing member connected to a memory, said initial and final state being integrated into at least one event-state-action diagram defining said finite state machine, said event-state-action diagram having a matrix structure where each event-state combination forms a matrix position. Actions formed by transitions, processing actions and timed actions are stored at the matrix positions. Said processing member being further provided for retrieving said actions and for supplying said retrieved actions to an action dispatcher in order to execute said actions, said action dispatcher comprising for each action of said third set an execution routine provided for controlling said execution of said action.

## Description

The present invention relates to a device operating as a finite state machine and provided for processing events and actions relating to at least one object to be travelled between an initial and a final state, said device comprising a processing member connected to a memory. The invention also relates to a method for processing events and actions.

Such a device and process are for example known as IBM FlexFlow (trademark of IBM), which is a workflow system developed by IBM for interactive internet applications. It is a state machine based workflow system, which formally describes business processes with state charts. The FlexFlow system uses these descriptions to directly control the execution of e-commerce applications. Flexflow has a visual modelling tool to design and modify business process state diagrams. The visual tool generates an XML representation of the process. This XML presentation is compiled and loaded into the FlexFlow database used by the FlexFlow engine. For FlexFlow, events are incoming messages and actions corresponding to tasks which are executed at the level of the application server. Flexflow has been integrated in IBM's WebSphere Commerce suites to build web-applications.

The problem of the prior art device and method is that the reality of processing events and actions is more complex. The way to capture transition events is not straightforward in a distributed environment. Indeed, events are triggered at different places, by different people and by different systems. Not all events are always properly generated and they do not always occur in the correct order. Most systems have difficulties to cope with this situation. Workflow systems, which are used to automate business processes, are not designed for handling such an arbitrary sequence of events. Transitions in workflow systems are "explicit" because they lack the state pattern, where transitions are "implicit". Workflow systems usually expect to receive events in a particular well-determined sequence with explicit "wait states" until an event can occur. As long as the expected event does not occur, all other events are queued and the process stops.

For example, in the case of the package delivery, events can originate from different sources :
a shipping application used in a warehouse;
scanners used in the warehouse;
handheld scanners used by the courier drivers;
scanners used at the drop-off location;
timer triggers in the central system;

All these sources are distributed over a wide geographic area and will typically communicate with the central system over the Internet, with its imperfection.

In reality it is important to make a distinction between events and transitions, because not all events may necessarily trigger a state transition. At the time at which events are received by the central system, they might indeed be obsolete, and the object to which the event relates, might already be in a further state. The system needs thus to react differently on events based on the current state of the relevant object. In the example of the package delivery one could imagine that there is an action linked to the transition "In transit -> delivered to location" which consists in notifying the recipient via a messaging system. The event, which triggers this transition, would be a scan event in a drop-off location. For whatever reason the event may be delayed, for instance because the scanner cannot synchronise. However, the recipient may actually see his package and collect it because he or she is visiting the location. Through a phone call, some operator in a service centre may update the status of the package as "Delivered to user". Subsequently, if the scanner finally manages to synchronise, the central system should not react on this event in the same way as if the state of the package would be ("In Transit"). As the current state is "Delivered to user" there is no need to notify the end user.

It is an object of the present invention to cope with this complexity by providing a device and a method, which enable to modify the behaviour of the objects by adding new type of events, new states and new actions according to the evolution of the business processes and systems generating the events. The device or method according to the invention should allow to branch anywhere in the process at any time in such a manner as to process events immediately, without having to queue.

The device or method according to the invention has been developed to address problems of real time supply chain event management, due to the specific nature of supply chain processes. It has been built in such a way as to solve real-time event-driven business process management problems where the business object to be monitored and controlled can be modelled by a finite state machine.

For this purpose a device according to the present invention is characterised in that said initial and final state are integrated into at least one event-state-action diagram defining said finite state machine, said memory having an input connected to a state engine editor and being provided for storing said diagram, said state engine editor having an input for receiving object data, identifying said object and said initial and final state, said object data comprising a first set of states, a second set of events and a third set of actions, said third set comprising a first sub-set of processing actions, a second sub-set of timed actions provided to initiate each time at least one predetermined action of said first sub-set after a predetermined time period has lapsed and a third sub-set of transition actions, said state engine editor being provided for forming said diagram by matrix-wise structuring said states of said first set and said events of said second set in order to create at positions within said matrix a state-event combination, said state engine editor being further provided for attributing to at least one state-event combination at least one of said actions of said third set, said processing member having an input for receiving event-messages and being provided for converting a received event-message into one of said events of said second set, said processing member being also provided for monitoring said states in order to recognise an actual state for said object and for selecting within said state diagram upon receipt of one of said event-messages a position within said diagram corresponding to said actual state and said event obtained by said converting, said processing member being further provided for retrieving said actions located at said selected position and for supplying said retrieved actions to an action dispatcher in order to execute said retrieved action, said action dispatcher comprising for each action of said third set an execution routine provided for controlling said execution of said action. The use of an event-state-action diagram defined in a finite state machine enables to work with deterministic finite state machines thereby imposing a single transition for a state-event combination. The matrix organisation not only permits to establish a combination between the events and the states but also to attribute actions to such a combination. Not only this provides an operational flexibility, but also enables to add events and states without deviating from the diagram concept. Since the actions can be processing actions as well as timed or transition actions, a large flexibility is offered. Moreover, the timed actions allow the finite state machine to reach a subsequent or final state even if some expected events are not received or not received at an expected time. The use of event-state-action diagrams further gives the processing member the possibility to process event-messages by recognising the occurred event in the received message and select, by using the actual state, those actions attributed to the actual event-state combination.

A first preferred embodiment of a device according to the present invention is characterised in that said state engine editor is provided for attributing to each state-event combination, comprising said initial state, an action selected among said third sub-set. In such a manner care is taken that a transition from the initial state will be performed.

A second preferred embodiment of a device according to the present invention is characterised in that said actions belonging to said third set and said events of said second set are predetermined. In such a manner care is taken that for each action or each event there is an execution routine.

Preferably each diagram is identified by a description thereof and a reference to the object to which it belongs. This enables a more flexible processing.

A third preferred embodiment of a device according to the present invention is characterised in that each transition action of said third sub-set comprises a reference to an event of said second set, a source and a target state as well as a reference to said diagram to which it belongs. The presence of a target state enables the correct execution of the state transition.

A preferred embodiment of a method according to the present invention is characterised in that said objects are classified by object types, each object being identified by a definition and a description of the object type to which it belongs, and wherein a plurality of event-state-action diagrams are formed for each object, each diagram corresponding to one of said object types, said monitoring further comprising a selection of at least one of said diagrams based on said object type. This enables to use several diagrams for a same object.

The invention will now be described in more details with reference to the annexed drawings illustrating a preferred embodiment of a device and a method according to the present invention. In the drawings :
figure 1 shows a package state diagram using a standard ULM notation;
figure 2 shows schematically an example of the device according to the present invention;
figure 3 illustrates a finite state machine;
figure 4 illustrates an example of an event-state-action diagram;
figure 5 illustrates an example of an XML definition for an event-state-action diagram;
figures 6 to 12 illustrate examples of editors for events, processing actions, timed actions, state diagrams, states and event-action-state diagrams respectively;
figure 13 illustrates a correlation in an entity relationship diagram; and
figure 14 illustrates by means of a flowchart a method according to the present invention.

In the drawings a same reference has been allotted to a same or analogous element.

The present invention relates to a device and method for processing events, in particular business process events, which occur in an arbitrary order. Following the occurrence of an event, appropriate actions are triggered in real time, based on the current state of the business object on which the events apply. The method is based on a finite state machine design pattern. From a macro point of view, the method is non-deterministic i.e. the same events will not necessarily lead to the same actions. Moreover, the device allows dealing with changes in the business model, adding new objects, new state diagrams, new events, new states, new transitions and new actions as the situation evolves, which is usually the case in business environments.

A business process is usually described as a sequence of steps and actions, with a clear start and an end. The output of one step provides the input for the next step. Different methods have been developed to model business processes. Software tools have been developed to support the information flows related to business processes. While traditionally, enterprise applications were developed to support the actions taken and information processed with a particular step in the process, it is only recently that methods and tools have been developed to support the whole process and the exchange of information between different enterprise applications (example : transfer of information from the ordering system to the billing system and subsequently to the accounting system). More specifically, workflow systems allow to model graphically the different steps in the process and to connect the output of one step with the input of the next step in the process. These tools usually allow software coding to implement business logic and do data manipulations.

The inconvenience with workflow systems is that the process flow has always to go through a predetermined path connecting subsequent steps to reach the end of the process in a sequential and deterministic way. Each step in the process is not aware of the whole process. A step receives input from its predecessor, does some processing and provides input to its successor. In reality, processes do not always work this way and workflows are not always the most natural way to represent business interactions between individuals, organisations and systems.

The aim of business processes is to manipulate or transform a business object (like an order, a shipment, a parcel or any business transaction), which is handed over between different individuals, locations, organisations or systems until completion of the transaction. The business objects can be physical (e.g. a parcel) or electronic (e.g. an electronic message). The behaviour of such an object can be modelled with a state diagram or a finite state machine. During its lifecycle the object will go through different states. Actions are linked to a particular state of the object. As soon as an object arrives in a certain state, appropriate actions can be taken.

The challenge is to maintain the consistency between the real physical state of the object and the virtual state as maintained by the information system and to take the actions linked to valid state transitions in an appropriate way. During the lifecycle of the object, different agents on remote systems will publish events on the actual or current state of the object. Due to the nature of the distributed network like the Internet, the published events do not always arrive on time at the central information system. There may be a delay between the moment at which the event occurred and the moment it was received by the device. Events may arrive in the wrong order and there may be many occurrences of the same event. In other words, the generation of events is non-deterministic.

In order to explain the problem to be solved, a real example from the parcel distribution industry will be taken. Packages are shipped from a source, corresponding to an initial state, to a destination, corresponding to a final state, within a certain time frame. The shipment can be seen as a business transaction with a package as a business object to be monitored by the device according to the invention in order to ensure the proper completion of the business transaction and take appropriate actions where needed, like notifying the expeditor that the package will be late or notifying the recipient that the package has arrived. During its transportation, the package will go through different states.

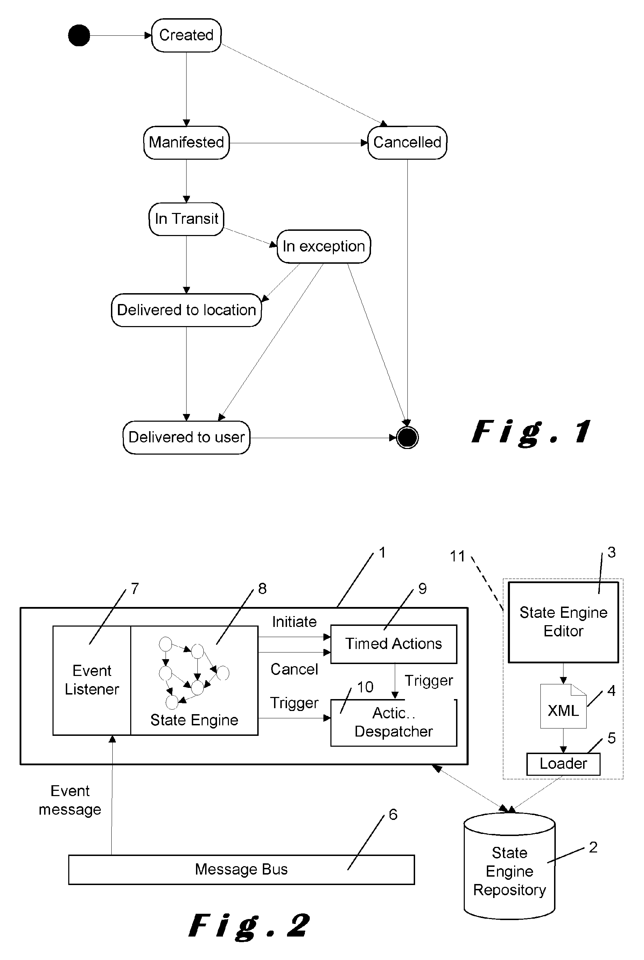

An example of a package state diagram is shown in figure 1, using the standard UML (Unified Modelling Language) notation for finite state machines. The UML notation uses the pairs "event/action" on the transition arrow to describe the behaviour of the objects, the event triggers the transition and the action results from it. A package is "created", for instance, when a tracking number has been generated by a shipping application and a label printed. This package can still be cancelled, as shown by the transition "created -> cancelled". Typically, at the end of the day or at the end of a packaging cycle, the shipment will be confirmed, a consignment note or manifest will be printed with all the details of the packages to be shipped and a shipping file will eventually be sent to the courier. The package is then in the state "Manifested" awaiting the courier to collect it. Once the package has been collected it goes in the state "In Transit", meaning that it is on its way. The package might never arrive, arrive at a wrong destination (misrouting) or simply arrive late. In this case, the package goes into an "In exception" state. This might be a final state as the package may really be lost. Normally the package will arrive at destination, which could be a drop-off point. It will stay there until the final recipient will come and collect it.

In the present invention a state design pattern or finite state machine is used for modelling the package delivery process or the behaviour of a package object. If the method enables to follow the package delivery process flow in real time, the method can also easily feed different systems, which are involved in such a process for monitoring and controlling purposes. For example:
- a track and trace web site showing the current state of the package;
- a messaging system to notify a recipient indicating that a package can be collected;
- a billing system to register billing records;
- an alerting system to notify any exception in the process (package late or misrouted);
- a data warehouse for service level calculations.

Such actions can be taken when a transition to a subsequent state occurs or after a time out within a certain state (for example, package too long "In transit" or too long in "Delivered to location").

The device and method according to the present invention have been developed to address problems of a real time supply chain event management, due to the specific nature of supply chain processes, but have been built in such a way as to solve real-time event-driven business process management problems, where the business object to be monitored and controlled can be modelled by a finite state machine.

Figure 2 shows schematically an embodiment of a device according to the present invention. The device comprises a processing member 1 connected to a memory 2. The latter is also connected to a state engine editor 11 comprising an editing module 3, an XML formatter and a loader 5. The processing member has an input connected to a message bus 6 provided for transferring event-messages. The processing member comprises an event- receiving element 7 connected to a state engine processor 8. An output of the state engine processor 8 is connected to an action dispatcher 10 and a further output of the state engine processor is connected to a timed action generator 9, having a trigger signal output connected to the action dispatcher.

The state engine editor 11 is provided to create event-state-action diagrams, which are related to object types. The device allows to operate with several object types and to create a diagram for each object type. It is also possible to create several event-state-action diagrams per object type. The processing member is provided to create, even on runtime, actual event-state-action diagrams for effective real objects and to process a plurality of diagrams in real time. Each running diagram being associated to one running object of which the actual state is monitored.

The creation of such an event-state-action diagram is realised by the state engine editor 11, which has an input for receiving object data identifying the object to be processed as well as the initial and final state for that object. Once the event-state-action diagram is created for the object to be considered, it is stored in the memory 2. When the diagram is stored in the memory it can be retrieved by the processing member 1 in order to be processed. The processing member will react on event-messages circulating on the message bus 6.

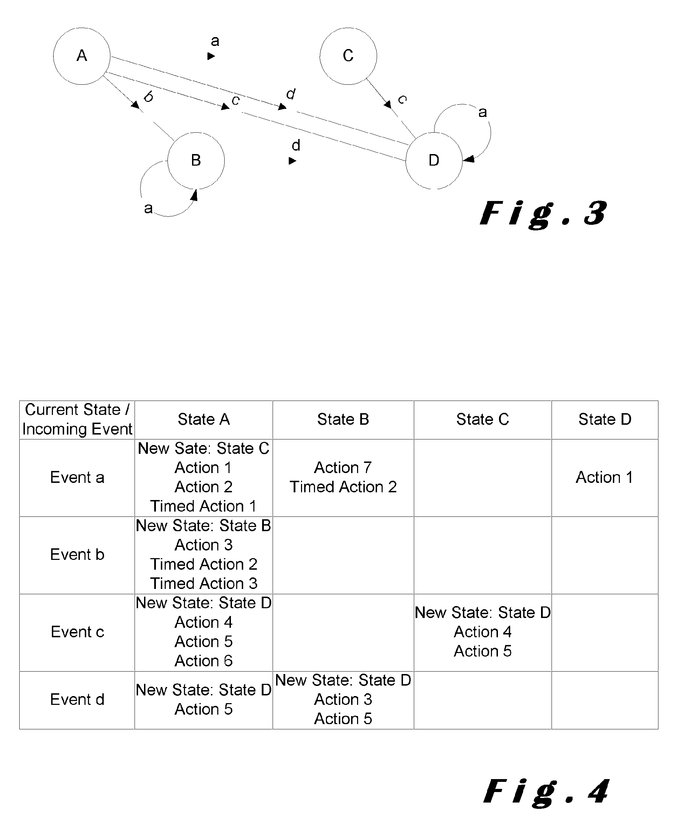

The state engine processor 8 is built on the concept of a finite state machine. This concept is illustrated with reference to an example shown in figure 3. The finite state machine of figure 3 comprises four states A, B, C and D of which A is the initial state and D the final state, C and B being intermediate states. The states are grouped in a first set grouping a finite number of states. A transition from one state to another is caused by an event. It should however be noted that not each event will cause a transition. Different events may cause the same transition, in case a different behaviour (different actions) is desired based on the triggering event. One event can only cause one transition from a source state to a target state. When an event occurs, eventually a transition is made and actions are triggered. The events are grouped in a second set grouping a finite number of events. The actions are grouped in a third set grouping a finite number of actions. The third set comprises a first sub-set of processing actions, such as for example sending a receipt message. The third set further comprises a second sub-set of timed actions, which are actually timers triggering action(s) upon expiration of a predetermined time period. When the state of an object changes, all running timers (or timed actions) of this object are cancelled. Finally the third set comprises a third sub-set of transition actions triggering a transition from the actual state to the target state.

Figure 4 shows an event-state-action diagram based on the example of figure 3. This model allows to define, modify, monitor and control business processes in a very efficient way. The method enables to easily create new state machines, add or modify states, events and actions. Based on the received object data identifying the object, the event-state-action diagram is formed by the state engine editor 11. For this purpose the state engine editor 11 uses the matrix set-up illustrated in figure 4. The received object data comprise the events, selected among the second set and the states selected among the first set. The events are organised row-wise and the states column-wise. Consequently matrix positions are created, which each time corresponds to a state-event combination. The state engine editor is further provided for attributing to at least one state-event combination at least one of said actions of the third set. The attribution of the actions is i.a. determined by the initial and final state of the object, by the path to be traveled from the initial to the final state as well as by the events, which could occur.

The use of the matrix set-up enables a flexible build-up of the diagram because the number of rows and columns is as if to say unlimited. Modifications are implemented by adding or deleting rows or columns or by modifying the attributed events. Moreover the diagram makes it possible to treat incoming events in an unrelated order.

In the example shown in figures 3 and 4, it can be seen how the state engine would behave in case it misses an event. A normal flow of events could be state A to state C with event a and then to state D with event c. Suppose that state A is the actual state and that event a is missed. Upon receipt of event c, the object will move to state D. The same actions (actions 4 and 5) can be taken as if they would originate from state C. An additional action (action 6) is then taken, which could be for instance a warning message to notify that event a has been missed. If the relevant object later receives a notification of event a, it will not take the same actions associated with the transition, i.e. state A to state C, as they are not relevant in the context of state D, except for action 1.

It should also be noted in the example that both, event c and event d, will allow a transition from state A to state D, but the associated actions are different. Therefore they are considered as two different transitions within the same state diagram.

An example of an end use of such an application is in a package delivery business. In such a business the state of a package (the relevant object) may change before the state engine receives or can react on an event. E.g., the change of the state of a package to "ready for pick up" is an event, which typically triggers an action to notify the customer. However, if before such a notice is sent, the state of the package changes from "Ready for pick-up" to "Delivered" then the state engine determines not to send such a notice. Thus, the state engine responded to the same event differently based on the actual state of the package.

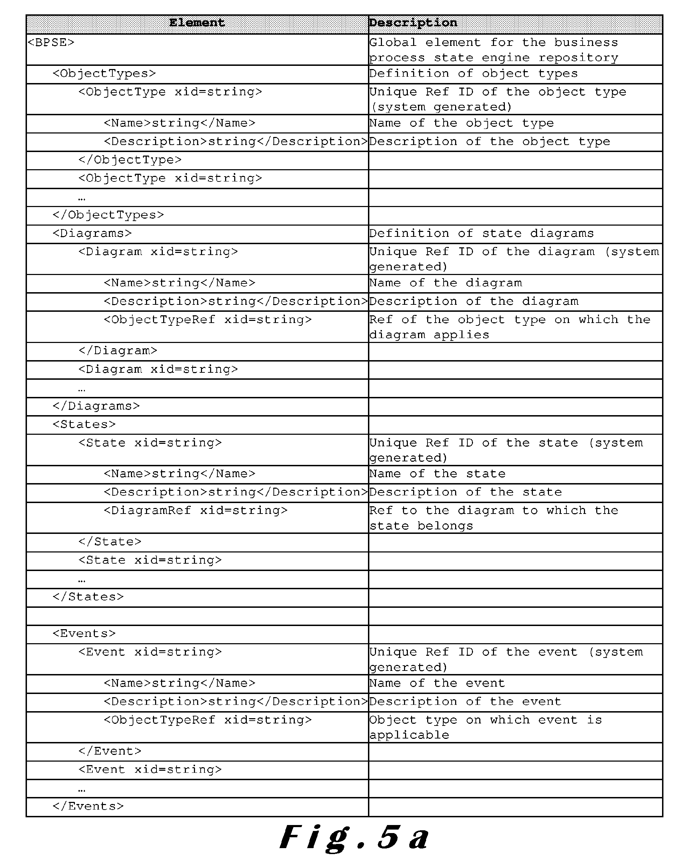

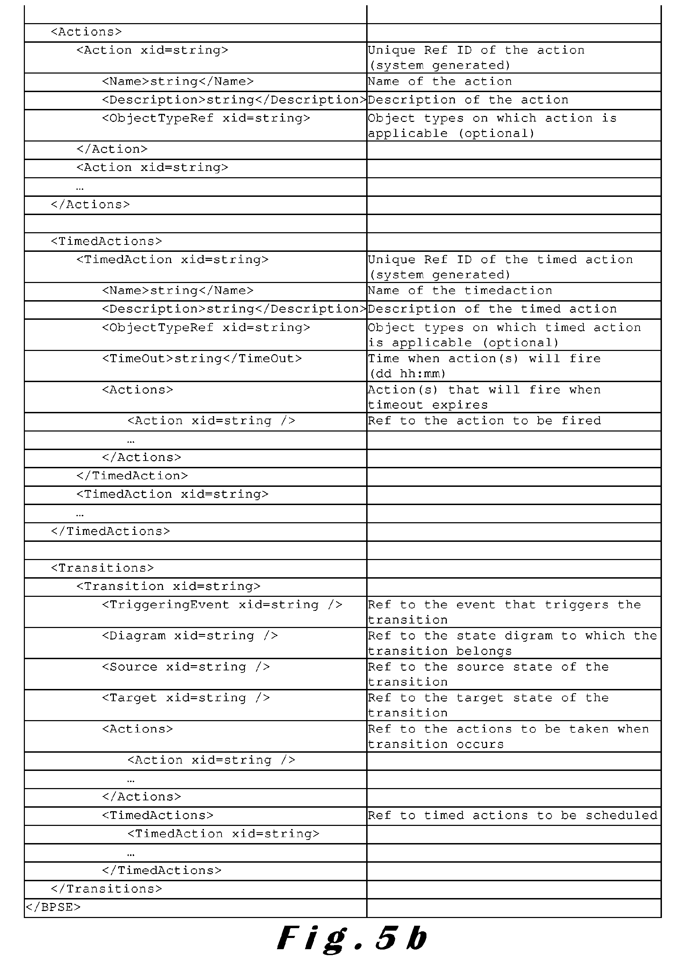

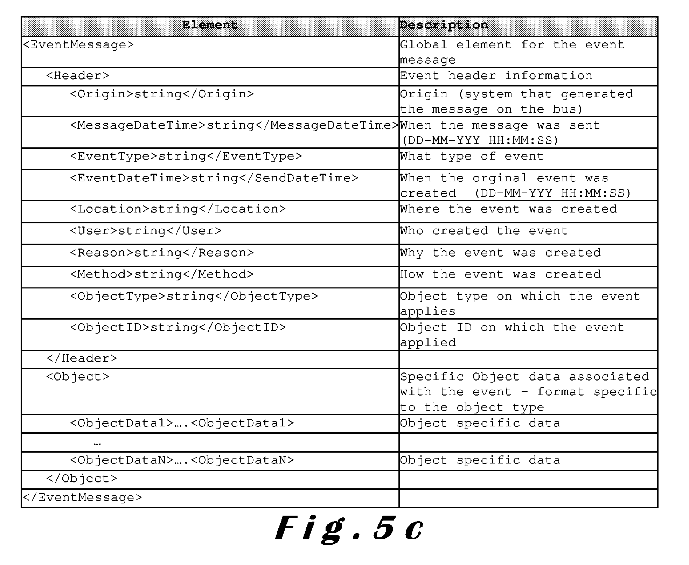

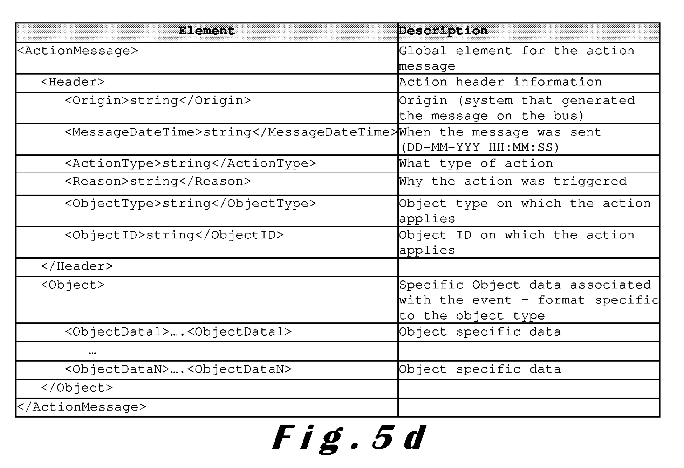

The state engine editor is preferably formed by a graphical user interface (GUI) for creating and modifying events-states-actions diagrams. It preferably generates an XML description of the diagram, which can then be loaded in the memory 2. Figure 5 shows an XML definition for the events-states-actions diagrams. The specification of this XML file can be considered as a "Business Process State Engine Language" or BPSEL, which has similarities with other Business Modeling language, but is much simpler. As can be seen in figure 5, the objects are classified by object types. This classification enables to attribute specific diagrams to each object type. For each object type a definition is stored in the memory. A unique reference identifier is attributed to each object type, as well as a name. A description of the object types is also stored. All these data enable a uniform definition of the object, thus leading to an efficient processing. As can be further seen in figure 5 a definition is also stored for the diagram. The diagram, the states, the events, the actions, all have a unique reference identifier, a name and a description. To each diagram there is also attributed a reference of the object type on which the diagram applies. To each state, there is also attributed a reference of the diagram, to which the state belongs. The timed actions all have a predetermined time period indicating at which time they should trigger. The transition actions have a reference to a triggering event, the source state and diagram as well as a reference to the target state to be reached upon occurrence of the transition.

A further distinction can be made between two types of actions :
generic actions, which can be invoked for any type of object. The code logic of these actions uses only the parameters of the triggering event, and not a logic specific to the object embodied in the event;
object specific actions, which can only be invoked from state machines relating to the same object type as the embodied object.

The implementation of these methods may use logic, which is specific to the type of the embodied object. An example of such an object specific action is an action referring to a tracking number of a parcel.

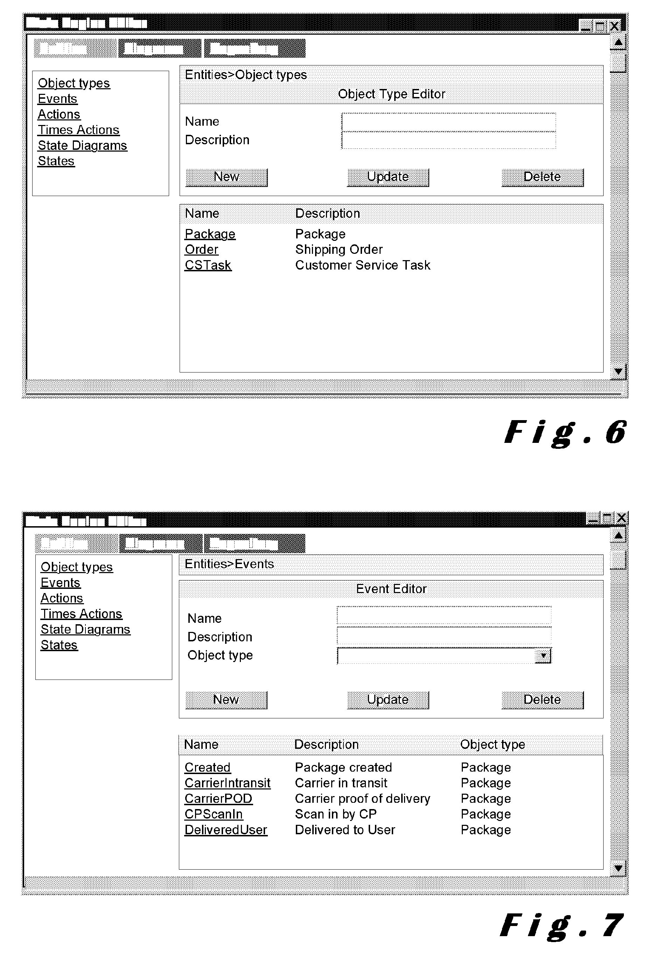

For forming the diagrams, the state engine editor will use the editors of which an example is given in the figures 6 to12. The state engine editor allows to define and modify all entities of the state machine. Figure 6 shows the basic screen of the editor as it appears in a standard HTML browser.

On the top there are three selections :
definitions of basic entities, object types, events, actions, timed actions, state diagrams and states;
definition of diagrams, for each state and for each event, transitions and actions to be performed;
repository, save and load XML schema's in the editor, and load the active schema into the memory.

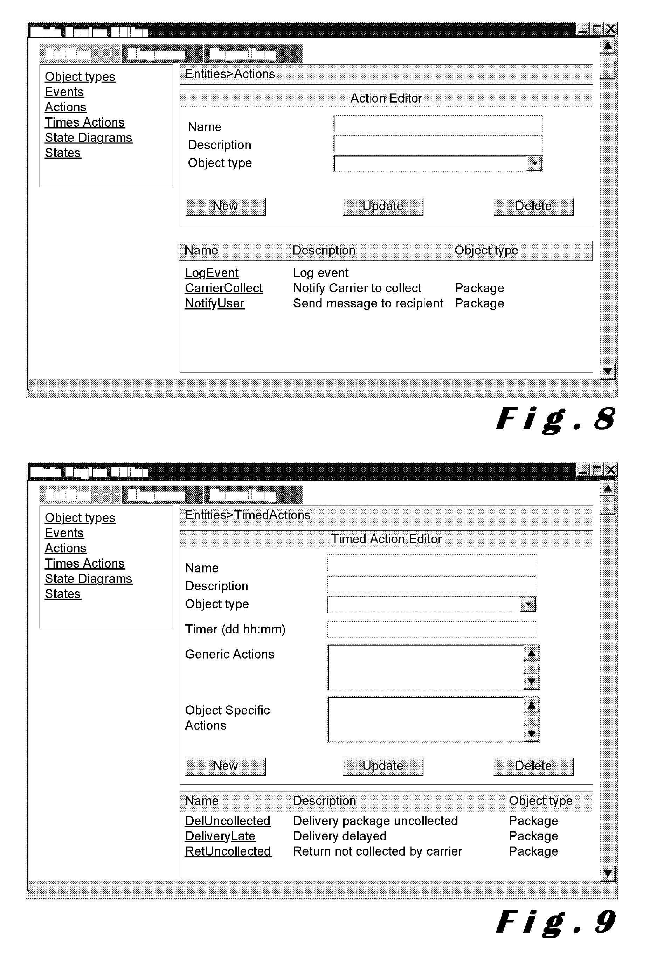

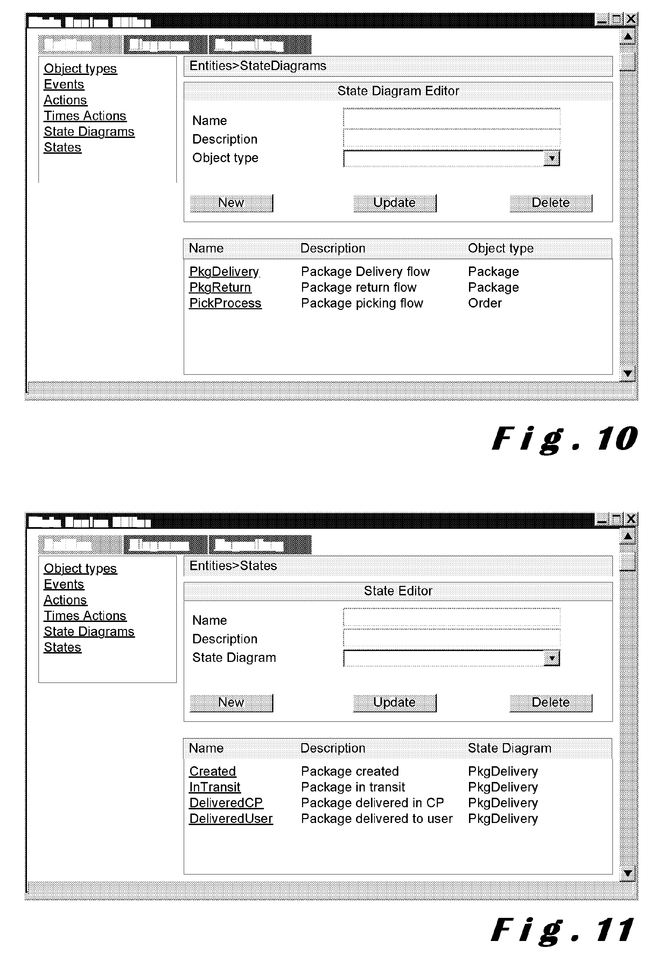

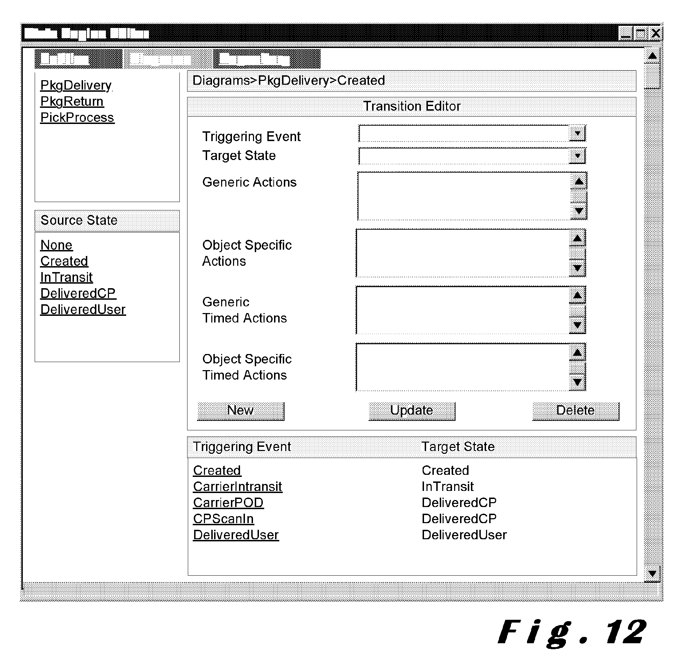

The screen layouts are self explanatory and directly in line with the definition of the XML file in figure 5. The object type screen is simply a declaration, and the indication of the object classes and/or databases of the application server. The designer can select an object type on the basis of the received object data and attribute a name and a description to the selected object type. The icons "new", "update" and "delete" provide to the designer the possibility either to create a new object type or to update or amend existing object types. A box is further provided for introducing a predetermined amount of names and associated descriptions. As is indicated in the figures 6 to 12, figure 6 relates to object types, figure 7 to events, figure 8 to actions, figure 9 to timed actions, figure 10 to state diagrams, figure 11 to states and figure 12 to diagrams.

It should be noted that events and object types are closely linked to each other. Event messages will always embody the associated object and will be applied only to the running state machine diagrams associated with the embodied object. The name of the event and the embodied object type serve as interface specification between the process designers and the designers of the messaging system, transporting the event messages and/or the object classes and/or databases of the application server. The name of the action serves as interface specification between the process designer and the designer of the method implementing the action and running on the application server. The object type is not mandatory for actions. If the object type is not specified, the action can be applicable on all state machines, for all type of objects.

Like actions, timed actions can be generic for all object types or specific to one object type. A timed action specifies a timeout variable and one or more generic or object type specific actions, which will be invoked upon expiration of the timer. The action list allows multiple selections.

The state diagram screen in the entities menu is for the declaration of the state diagram names and the link to the related object type. These declarations are needed to create the states. The same object type may have different state diagrams. The instantiation of an object may also have different state machines running in parallel, but not necessarily. This will depend on the events causing the transitions. The state machines, executing actions for the same object, may have different triggering events. However, the different running diagrams relating to a same object shall be different from each other.

For each diagram selected in the upper left table of figure 12, all possible states are displayed in the lower left table. For the selected source state, one can see all existing triggering events on which the state machine needs to act upon. It should be noted that not all possible events need to be configured and that a state transition is not always mandatory. The target state may be the same as the source state. In the upper right panel (Transition Editor) one can create, modify or delete transition by specifying, for each origin state, the triggering event, the target state and one or more generic or object specific actions and/or timed actions. The actions lists allow multiple selections.

The device according to the present invention is provided for processing a plurality of diagrams relating to a same object and also for processing a plurality of diagrams for a plurality of objects. The use of object types will enable the selection of a diagram, since the incoming event-message will comprise an indication of the object type.

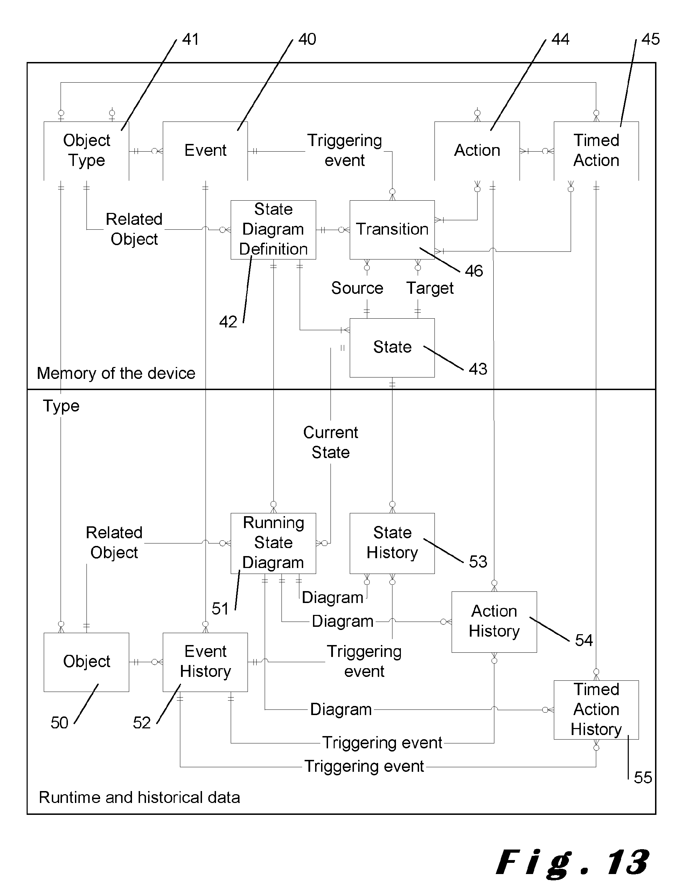

Figure 13 illustrates an Entity-Relationship Diagram (ERD) for processing an event-state-action diagram. The ERD comprises a first part, which forms the memory content and a second part formed by the runtime and historical data. From this ERD it can be derived that an event (40) is always related to one object type (41). In other words, if there is no object type considered, no events can happen. A state diagram definition (42) is always related to one object type (41) and has at least one state (43) by default, which is "none" and corresponds to the initial state of the finite state machine. An object type (41) may have more than one state diagram definition (42). So for example in the case of a parcel, one state diagram could be related to the billing of the object and another state diagram could be related to the travel path of the parcel. A state (43) is always related to a state diagram definition (42). An action (44) is optionally related to one object type (41). Without object type reference, the action (44) is considered as a generic action, which can be used in all state diagrams, regardless of the object type. A timed action (45) is optionally related to one object type (41). Without object type reference, the timed action is considered as a generic action, which can be used in all state diagrams, regardless of the object type. A timed action (45) is linked to at least one action (44). The state engine editor (3) will ensure consistency of object types (41) between timed actions (45) and actions (44). A transition (46) is always related to one state diagram definition (42), and is always characterised by one triggering event, one source state and one target state, which can be the same as the source state. Each record in the transition table corresponds to one cell of the event-state-action diagram as described in figure 5. A transition may have none or several associated actions and timed actions.

The part formed by the runtime and historical data is not in the XML definition, but is used by the state engine to maintain the instances of the running state machine and log their associated events, state changes, actions and timed actions:
Object (50)
Running State Diagram (51)
Event History (52)
State History (53)
Action History (54)
Timed Action History (55)

The relations between these tables mirror the definition tables kept in the memory of the device. One can see that one object may have several running state diagrams (51; each corresponding to a different state machine). A running state diagram has always one current state, corresponding to the possible states linked to the state diagram definition. An event is always related to one object, which is embodied in the event. State history, action history, timed action history records are always related to one running state diagram and one instance of a triggering event (Event History table). In case an object type should have different state diagrams, the same triggering event may be applicable to different running state diagrams and hence generating different transitions which will lead to different records in the state, action and timed action history tables, all linked to the same triggering event in the event history table.

The device according to the present invention allows alteration of existing state diagrams, even for state machines with running instances. In order to support change management, a version control mechanism has been introduced. In case a state diagram has changed, new reference identifiers are generated for the entities where needed, so that running instances are still linked to a previous version and can continue to function normally until a final state is reached. New instances will be linked to the new version of the diagram.

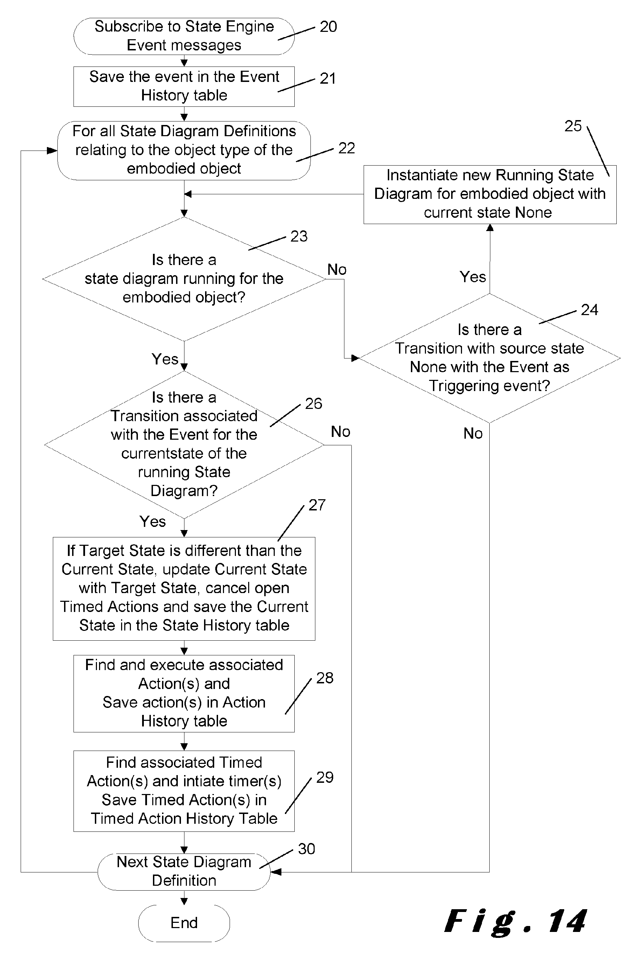

The operation of the device as well as the application of the method will now be further described with reference to the figures 13 and 14. For the operation of the device, three elements need to be known and supplied to the device :
- at least one object to be managed by the device (known by its type and unique identifier)
- the events to which the device will subscribe (known by their name and embodied objects)
- the processing actions to be executed by the device according to the rules defined in the editor (known by their name and type, generic or object specific).

Once these elements are supplied to the device, the event-state-action diagram(s) is (are) formed and the processing of the events can start. For forming the event-state-action diagram(s) use is made of the state diagram definition 42. The matrix framework of the diagram is built up with the supplied events and the different states to be occupied by the embodied object during its traveling from the initial to the final state. At those state-event combinations where actions are required, the processing actions are attributed. The state diagram definition 42 is only used during the diagram build-up. Thereafter the running state diagram 51 is used upon processing of the events and actions.

Upon receipt (20) of an event-message traveling on the message bus (6; figure 2) the processing member will save (21) the event present in the event-message into the event history table (52) with a link to the embodied object. The embodied object is recognised by analysing the event-message, which comprises an identifier for the embodied object. The object table (50) is filled with the embodied objects, so that whenever an event message with an embodied object occurs on the message bus, there is always a valid record in the object table for the embodied object. If the received event-message comprises an object, which is not present in the object table, an error message will be generated. The device will process (22) by means of a loop the received event for each state diagram definition record linked to the object type of the embodied object. In the loop there will be checked (23) in the running state diagram table if there is already a record with a reference to the current state diagram definition of the loop and a reference to the embodied object. If no record is found, the transition table is searched (24) to find whether there is a record with a reference to the current state diagram definition of the loop and a reference to the event being processed by the device and a reference to the source state "None". If such a record is found, a new record is created (25) in the table running state diagram, with a link to the embodied object, a link to the current state diagram definition of the loop and a link (the current state) to the state "None" which is linked to the same state diagram definition. If such a transition from "None" with the processed event is not found, the device will loop (30) to the next state diagram definition. In other words during step 24 there is checked if a new running state diagram has to be created for the embodied object.

Once the state diagram for the embodied object is found, the current state is also recognised since the device memorises for each running diagram, the actual state thereof. The actual state in combination with the received event indicates a location in the matrix forming the diagram. As described here before, at this matrix location the actions to be executed, if any, are stored. If a transition action has to be executed, the device will search (26) in the transition table in order to find a record with a reference to the current state diagram definition of the loop and, as triggering event, a reference to the processed event and, as source state, a reference to the same state as the current state of the running state diagram corresponding to the current state diagram definition of the loop and having a reference to the embodied object. Such a transition record will always be unique, per definition of the deterministic nature of the finite state machine at design time. If such transition record is found, the device will process one or more of the three action types, depending on the actions indicated at the addressed matrix location :
- state change and cancel related open timers, if the target state is different from the source state (27);
- processing actions, which will execute the code of the related pre-determined actions (28) by means of the action dispatcher (10, figure 2). For this purpose, the action dispatcher comprises for each action of the third set an execution routine provided for controlling said execution of said retrieved action(s);
- timed actions, which will initiate the timers (29).

Every action is recorded in respectively the state, action and time action history tables for further reference and analysis.

The device also comprises a scheduler (9, figure 2), which will automatically execute the processing actions linked to the timed actions after expiration of the timer as specified in the timed action table.

## Claims

1. A device operating as a finite state machine and provided for processing events and actions relating to at least one object to be travelled between an initial and a final state, said device comprising a processing member connected to a memory, **characterised in that** said initial and final state are integrated into at least one event-state-action diagram defining said finite state machine, said memory having an input connected to a state engine editor and being provided for storing said diagram(s), said state engine editor having an input for receiving object data, identifying said object and said initial and final state, said object data comprising a first set of states, a second set of events and a third set of actions, said third set comprising a first sub-set of processing actions, a second sub-set of timed actions provided to initiate each time at least one predetermined action of said first sub-set after a predetermined time period has lapsed and a third sub-set of transition actions, said state engine editor being provided for forming said diagram by matrix-wise structuring said states of said first set and said events of said second set in order to create, at positions within said matrix, a state-event combination, said state engine editor being further provided for attributing to at least one state-event combination at least one of said actions of said third set, said processing member having an input for receiving event-messages and being provided for converting a received event-message into one of said events of said second set, said processing member being also provided for monitoring said states in order to recognise an actual state for said object and for selecting within said state diagram, upon receipt of one of said event-messages, a position within said diagram corresponding to said actual state and said event obtained by said converting, said processing member being further provided for retrieving said actions located at said selected position and for supplying said retrieved actions to an action dispatcher in order to execute said retrieved action, said action dispatcher comprising for each action of said third set an execution routine provided for controlling said execution of said action.

2. A device as claimed in claim 1, **characterised in that** said state engine editor is provided for attributing to each state-event combination, comprising said initial state, an action selected among said third sub-set.

3. A device as claimed in claim 1 or 2, **characterised in that** said state engine editor is provided for attributing to each state-event combination, comprising said final state, only actions belonging to said first or second sub-set.

4. A device as claimed in anyone of the claims 1 to 3, **characterised in that** said actions belonging to said third set are predetermined.

5. A device as claimed in anyone of the claims 1 to 4, **characterised in that** said events belonging to said second set are predetermined.

6. A device as claimed in anyone of the claims 1 to 5, **characterised in that** each diagram is identified by a description thereof and a reference to the object to which it belongs.

7. A device as claimed in anyone of the claims 1 to 6, **characterised in that** each state is identified by a description thereof and a reference to the diagram to which it belongs.

8. A device as claimed in anyone of the claims 1 to 7, **characterised in that** each event is identified by a description thereof and a reference to the object to which it belongs.

9. A device as claimed in anyone of the claims 1 to 8, **characterised in that** each action is identified by a description thereof.

10. A device as claimed in anyone of the claims 1 to 9, **characterised in that** said state engine editor is provided for forming said diagrams with an XML description.

11. A device as claimed in anyone of the claims 1 to 10, **characterised in that** each transition action of said third sub-set comprises a reference to an event of said second set, a source and a target state as well as a reference to said diagram to which it belongs.

12. A device as claimed in anyone of the claims 1 to 11, **characterised in that** said first sub-set comprises a first class of generic actions and a second class of specific actions identified by a reference to the object to which it belongs.

13. A method for processing, within a finite state machine, events and actions relating to at least one object to be travelled between an initial and a final state operating, **characterised in that** said method comprises :
- receiving object data identifying said object and said initial and final state, said object data comprising a first set of states, a second set of events and a third set of actions, said third set comprising a first sub-set of processing actions, a second sub-set of timed actions provided to initiate each time at least one predetermined action of said first sub-set after a predetermined time period has lapsed and a third sub-set of transition actions;
- forming at least one event-state-action diagram defined in a final state machine pattern of said finite state machine by matrix-wise structuring said states of said first set and said events of said second set in order to create at positions within said matrix each time a state-event combination;
- integrating said initial and final state into said diagram;
- attributing to at least one state-event combination at least one of said actions of said third set;
- receiving event-messages relating to said object(s) and converting a received event-message into one of said events of said second set;
- recognising said object into said received event-message;
- monitoring said states in order to recognise an actual state for said recognised object and selecting within said state diagram upon receipt of one of said event-messages a position within said diagram corresponding to said actual state and said event obtained by said converting;
- retrieving said actions located at said selected position and executing said retrieved action by processing an execution routine provided for controlling said execution of said retrieved action.

14. A method as claimed in claim 13, **characterised in that** said objects are classified by object types, each object being identified by a definition and a description of the object type to which it belongs, and wherein a plurality of event-state-action diagrams are formed for each object, each diagram corresponding to one of said object types, said monitoring further comprising a selection of at least one of said diagrams based on said object type.

15. A method as claimed in claim 14, **characterised in that** said object types are predetermined.

16. A method as claimed in anyone of the claims 13 to 15, **characterised in that** for each of a plurality of objects at least one dedicated event-state-action diagram is formed, said event-messages comprising an object identifier, said monitoring further comprising a selection of at least one of said diagrams based on said identified object.
